(19) Europäisches Patentamt / European Patent Office / Office européen des brevets

(11) **EP 3 490 255 B1**

(12) **FASCICULE DE BREVET EUROPEEN**

(45) Date de publication et mention de la délivrance du brevet:
**21.02.2024   Bulletin 2024/08**

(21) Numéro de dépôt: **18206916.1**

(22) Date de dépôt: **19.11.2018**

(51) Classification Internationale des Brevets (IPC):
**H04N 19/172** $^{(2014.01)}$     **H04N 19/117** $^{(2014.01)}$
**H04N 19/136** $^{(2014.01)}$     **H04N 19/146** $^{(2014.01)}$
**H04N 19/86** $^{(2014.01)}$

(52) Classification Coopérative des Brevets (CPC):
**H04N 19/146; H04N 19/117; H04N 19/136; H04N 19/172; H04N 19/86;** G06T 2207/20204; H04N 19/103; H04N 19/115; H04N 19/147; H04N 19/19

(54) **COMPRESSION INTELLIGENTE DE CONTENUS VIDÉO GRAINÉS**

INTELLIGENTE KOMPRIMIERUNG VON GROB GEPIXELTEN VIDEOINHALTEN

INTELLIGENT COMPRESSION OF GRAINY VIDEO CONTENT

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité:   23.11.2017   FR 1761125

(43) Date de publication de la demande:
**29.05.2019   Bulletin 2019/22**

(73) Titulaire: **ATEME**
**78140 Velizy Villacoublay (FR)**

(72) Inventeur: **MORA, Elie Gabriel**
**75004 PARIS (FR)**

(74) Mandataire: **Plasseraud IP**
**66, rue de la Chaussée d'Antin**
**75440 Paris Cedex 09 (FR)**

(56) Documents cités:
EP-A1- 1 564 997     EP-A1- 1 569 458
EP-A1- 3 041 236     EP-A2- 0 758 186
JP-A- 2008 066 911     US-A1- 2007 014 484

**Description**

La présente invention se situe dans le domaine du traitement de l'image et de la vidéo, plus précisément dans le traitement du grain de film pour l'encodage vidéo. L'invention concerne un procédé de traitement d'un flux vidéo comportant un grain de film.

Le grain de film présent dans un signal vidéo analogique confère à la vidéo un rendu particulier. Ce rendu étant encré dans les moeurs, les utilisateurs de vidéos peuvent souhaiter un rendu équivalent avec un signal vidéo numérique. Par conséquent, le grain de film est souvent ajouté à un signal vidéo numérique dans le but d'obtenir un rendu similaire à un signal vidéo analogique. Lors de la capture d'un signal vidéo numérique, tel qu'un signal vidéo numérique haute définition par exemple, le grain de film est absent. L'absence de grain de film au sein d'un signal vidéo peut être considérée par un utilisateur comme un inconvénient. En effet, le rendu d'un visage humain d'un signal vidéo numérique, en l'absence de grain de film, peut paraitre « inanimé ». Par conséquent, lors de l'enregistrement du signal vidéo numérique, le grain de film est souvent ajouté après la capture. Suite à cette nécessité d'ajouter un grain de film au sein d'un signal vidéo numérique, de nombreuses sociétés commercialisent des logiciels dénommés « fournisseurs de grain numériques ». Ceci permet donc de se représenter l'importance de l'ajout de grain de film au sein d'un signal vidéo numérique.

Le grain de film constitue néanmoins une difficulté lors de l'encodage d'un signal vidéo. En effet, la présence de grain de film augmente la complexité nécessaire au traitement qui correspond à l'encodage du signal vidéo numérique. Le fait de coder un contenu vidéo comprenant un grain de film implique un coût de codage (en nombre de bits) plus élevé. En conséquence, en fonction de l'encodeur vidéo choisi, le codage d'un contenu vidéo comprenant un grain de film peut donc s'avérer comme une difficulté majeure. De plus, après codage d'un contenu vidéo numérique comprenant un grain de film, rien ne garantit un résultat équivalent ou proche du rendu obtenu avec un contenu vidéo analogique comprenant un grain de film.

Dans le but de palier à la difficulté concernant la gestion de contenus vidéo grainés pour les encodeurs vidéo, plusieurs solutions sont proposées dans la littérature. Une première solution souvent proposée consiste à supprimer entièrement le grain de film du contenu vidéo, ceci dans le but de coder un contenu vidéo, dénué de tout grain de film. Un message est inséré dans le flux vidéo transmettant une information au décodeur selon laquelle le grain de film doit être ajouté après décodage. Cette solution présente des inconvénients non négligeables. En effet, les décodeurs ne supportent pas tous cette fonction.

Une autre solution concernant la gestion de contenus vidéo grainés est de proposer un traitement du grain de film dans le but de conserver celui-ci lors de l'encodage vidéo. Cependant, une telle solution ne garantit en rien le rendu final obtenu, telle que la conservation d'un aspect grainé réparti uniformément sur le contenu vidéo. De plus, les traitements actuellement proposés dans la littérature sont souvent insuffisants ou inadaptés au débit d'encodage. Etant donné que le débit d'encodage est souvent peu ou pas pris en compte lors de la gestion de contenus vidéo grainés, l'efficacité d'une telle solution reste limitée.

Le grain de film présent dans un contenu vidéo analogique est un phénomène inévitable. Lorsqu'un contenu vidéo analogique est transformé en un contenu vidéo numérique par une action de numérisation, un bruit numérique apparait dans le contenu vidéo numérique. Le bruit numérique représente une information non-désirée présent dans les données numériques correspondant au contenu de vidéo numérique. En effet, dans le domaine du traitement du signal, une information non désirée au sein d'un contenu numérique, image ou vidéo, est qualifiée en tant que bruit numérique. Ce bruit numérique peut se matérialiser sous la forme de détails aléatoires, ce qui se traduit dans le cas présent, par un grain de film dont la distribution est aléatoire. Le grain de film peut également être rajouté artificiellement a postériori de la capture d'un signal vidéo numérique, comme mentionné précédemment.

Le traitement utilisé pour diminuer ou supprimer le bruit d'une image ou vidéo est appelé « débruitage ». Par conséquent, dans la suite de la description de la présente invention, on entend par débruiteur, un filtre employé pour effectuer le débruitage à savoir diminuer ou supprimer le bruit présent dans un contenu vidéo.

Le grain de film possède un niveau d'énergie élevé relativement important, avec des pics potentiels dans les hautes fréquences. Par conséquent, coder un contenu vidéo comprenant un grain de film est coûteux en termes de ressources. En outre, le contenu vidéo souffre d'une mauvaise estimation de mouvement. Une mauvaise estimation de mouvement fournit une prédiction inexacte, et augmente ainsi le coût de codage. Le débit d'encodage est un paramètre non-négligeable à prendre en compte concernant la gestion de contenus vidéo grainés. En effet, lorsque le débit d'encodage n'est pas suffisamment élevé, un encodeur classique aplatira souvent les zones d'une image contenant un grain de film. En conséquence, le rendu pour un utilisateur peut correspondre à un effet peu naturel, dû à la coexistence de zones grainées et non grainées au sein d'un même contenu vidéo. Ainsi, l'aspect rendu par un grain de film uniformément réparti n'est plus garanti pour l'utilisateur.

Dans le but d'améliorer la gestion de grain de film au sein d'un contenu vidéo, il a été proposé dans la littérature de supprimer le grain de film du contenu vidéo lors d'une étape de pré-traitement préalable à l'encodage vidéo. Le grain de film est ensuite restitué par le décodeur. Dans une telle application, un message de type SEI, de l'anglais « Supplemental Enhancement Information » est transmis avec le flux vidéo.

Plusieurs techniques ont été développées en se basant sur la suppression du grain de film avant l'encodage vidéo et la restitution de celui après le décodage. Une des techniques existantes de gestion de grain de film propose de supprimer le grain de film avec un filtrage temporel. L'effet rendu par le grain de film est restitué par le décodeur à l'aide d'un modèle autorégressif. Une solution alternative de l'état de la technique consiste à proposer un modèle paramétré synthétisant après décodage un grain qui ressemble statistiquement au grain original. L'art antérieur propose également de caractériser le grain de film dans le domaine fréquentiel.

Les solutions présentées ci-dessus présentent un inconvénient majeur. En effet, pour communiquer l'information concernant le grain de film au décodeur, il est nécessaire d'inclure dans le flux vidéo un message de type SEI. Or, un décodeur ne supporte pas forcément ce type de message. Dans un tel cas, c'est-à-dire qu'un flux vidéo contenant un message de type SEI est envoyé au décodeur et que le décodeur ne supporte pas ce type de message, le message est simplement ignoré. Aucun grain n'est rajouté après décodage, et le résultat final est une vidéo lisse avec un rendu peu naturel. Etant donné que les fournisseurs de services vidéo ne peuvent disposer de l'information concernant le type de décodeur utilisé par les utilisateurs, ce type de solution est peu employé.

Une autre solution dans la gestion de grain de film pour les contenus vidéo propose le développement d'outil normatif. Un inconvénient de la mise en oeuvre d'une telle solution est qu'elle impose que le décodeur doit implémenter l'outil développé. L'application d'une telle solution reste donc très limitée.

Certains encodeurs vidéo proposent un mode de fonctionnement adapté au contenu vidéo comprenant un grain de film. Les traitements proposés pour le grain de film peuvent être efficaces mais nécessitent l'intervention de l'utilisateur. En effet, un mode gestion de grain de film doit être activé ou désactivé par l'utilisateur en fonction du contenu vidéo visualisé. Si les traitements pour le grain de film sont activés alors qu'il n'y a pas de grain de film présent dans la vidéo, ces traitements risquent au contraire de détériorer la qualité vidéo normalement obtenue sans traitement. Par conséquent, l'utilisateur doit intervenir à chaque fois qu'il voudra encoder un contenu vidéo différent. La mise en application d'un encodeur vidéo comprenant un mode de fonctionnement adapté à la gestion de contenu vidéo comprenant un grain de film, et qui requiert expressément une activation de l'utilisateur pour chaque contenu, est donc limitée.

Le document US 2016/0198165 propose une solution sans intervention de l'utilisateur. Le grain de film compris dans le contenu vidéo est détecté à l'aide d'une méthode de calcul temporelle. Une fois le grain de film détecté, une réallocation de débit est appliquée. Le débit d'encodage n'est ici pas pris en compte dans la gestion du grain de film. Le document US 2007/014484 A1 divulgue un procédé de traitement de flux vidéo dans le cadre d'un encodage, dans le but de réduire le bruit analogique et de réduire le grain de façon sélective en fonction du débit d'encodage et du niveau d'intensité de grain.

Il existe un besoin pour un procédé de traitement d'un flux vidéo avant encodage comprenant un grain de film ne présentant pas les inconvénients ci-dessus.

Il existe en outre un besoin pour un procédé de traitement d'un flux vidéo comprenant un grain de film dans lequel le débit d'encodage est pris en compte.

La présente invention vient améliorer la situation.

À cet effet, un premier aspect de l'invention concerne un procédé selon la revendication 1.

Ainsi, l'intensité de grain de film et le débit d'encodage vidéo sont pris en compte pour proposer une stratégie de gestion de grain de film adaptée au contenu vidéo. Un tel procédé fournit l'avantage d'être entièrement automatique. En effet, une intervention ou une paramétrisation explicite de l'utilisateur n'est pas nécessaire. De plus, l'application d'une stratégie de gestion de grain de film peut être déployée en amont de tout système d'encodage déjà existant.

En complément, si le débit est inférieur à un premier débit seuil (D0), on applique un débruitage d'image avec une force de débruitage qui est fonction de l'intensité de grain mesurée.

Selon un mode de réalisation, si le débit est supérieur à un premier débit seuil ($D_0$) et si l'intensité de grain mesurée est inférieure à un premier seuil d'intensité ($I_0$), on n'applique aucun traitement de gestion de grain de film au flux vidéo.

Selon un mode de réalisation, si le débit est supérieur à un premier débit seuil (D0) et si l'intensité de grain mesurée est supérieure à un premier seuil (I0), on applique un traitement de conservation d'énergie au flux vidéo.

Selon un mode de réalisation, si le débit est en outre inférieur à un deuxième débit seuil (D1), lequel deuxième débit seuil (D1) est supérieur au premier débit seuil (D0), et si l'intensité de grain mesurée est supérieure à un deuxième seuil d'intensité (I1), supérieur au premier seuil d'intensité (I0), on applique, outre le traitement de conservation d'énergie au flux vidéo, un filtre passe-bas sur l'image pour atténuer les hautes fréquences de grain.

En complément, le traitement de conservation d'énergie appliqué au flux vidéo peut comprendre une allocation plus équitable du débit d'encodage associé au flux vidéo sur les différentes trames qui composent le flux.

En complément le traitement de conservation d'énergie appliqué au flux vidéo peut comprendre une prise en compte d'une différence d'énergie dans les calculs de coûts débit-distorsion.

Selon un mode de réalisation, le procédé peut comporter en outre : une transmission du flux vidéo, ledit flux vidéo étant dépourvu de message relatif à la présence de grain de film.

Ainsi, aucun traitement normatif non interprétable par un décodeur standard n'est introduit.

En complément, le message relatif à la présence de grain de film est un message de type SEI.

Ainsi, il est possible de proposer une stratégie de gestion de grain de film sans transmettre avec le flux vidéo un message de type SEI.

Un deuxième aspect de l'invention concerne un programme informatique selon la revendication 7.

Un troisième aspect de l'invention concerne un dispositif selon la revendication 8.

D'autres caractéristiques et avantages de la présente invention ressortiront de la description ci-dessous, en référence aux figures annexées qui en illustrent un exemple de réalisation dépourvu de tout caractère limitatif et sur lesquelles :

- la figure 1 représente un exemple d'image comprenant un grain de film issu d'un contenu vidéo;
- la figure 2 représente un exemple de principe de l'invention ;
- la figure 3 illustre des étapes du procédé de traitement d'un flux vidéo selon un exemple de mode de réalisation de l'invention ;
- La figure 4 illustre un exemple de représentation matricielle des stratégies de gestion de grain de film ;
- La figure 5 illustre l'obtention du débit d'encodage pour une trame courante ;
- La figure 6 représente la force de débruitage $\sigma$ d'un premier débruiteur en fonction de l'intensité du grain de film $i$ ;
- Les figures 7a, 7b et 7c illustrent le résultat d'encodage d'un contenu comprenant un grain de film élevé à bas débit d'encodage obtenue après application d'un exemple de mode de réalisation de l'invention ;
- Les figures 8a, 8b et 8c illustrent le résultat d'encodage d'un contenu comportant un grain de film élevé à moyen débit d'encodage obtenu après application d'un exemple de mode de réalisation de l'invention;
- La figure 9 représente l'écart type $\sigma$ d'un deuxième débruiteur en fonction de l'intensité de grain de film $i$ ;
- La figure 10 illustre un exemple de calcul de seuils d'intensité de grain de film ;
- La figure 11 illustre un exemple de principe de l'invention comprenant un module d'analyse de contenu ;
- La figure 12 illustre un dispositif selon un exemple de mode de réalisation de l'invention.

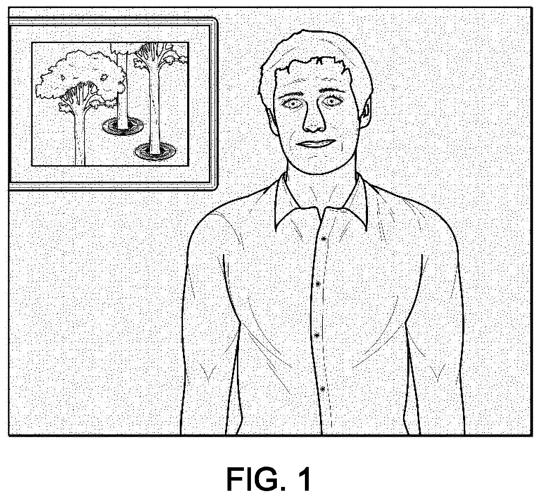

La figure 1 représente un exemple d'image grainée issu d'un contenu vidéo. La figure 1 représente un individu situé dans un environnement intérieur.

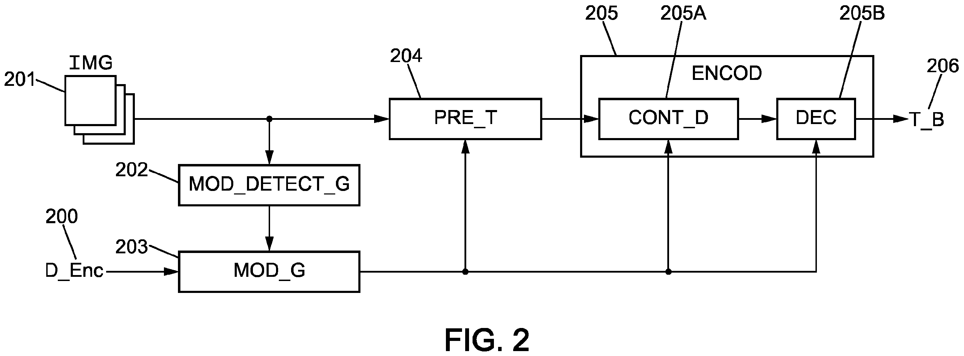

La figure 2 représente un exemple de principe de l'invention. Un module de gestion de grain de film MOD_G 203 a pour fonction de déterminer une stratégie adaptée pour la gestion du grain de film au sein d'un contenu vidéo IMG 201. Une détection de grain de film est effectuée par un module de détection de grain de film MOD_DETECT_G 202. Le module de détection de grain de film MOD_DETECT_G 202 détermine ainsi le grain de film au sein du contenu vidéo IMG 201. Le module de gestion de grain de film MOD_G 203 prend en compte l'information concernant la détection de grain de film en provenance du module de détection de grain de film MOD_DETECT_G 202. Le module de gestion de grain de film MOD_G 203 prend également en compte le débit d'encodage D_ENC 200. Le débit d'encodage D_ENC 200 représente le débit d'encodage souhaité par un utilisateur du contenu vidéo IMG 201. Lorsque le module de gestion de grain de film MOD_G 203 est en possession des deux informations : grain de film détecté et débit d'encodage, le module de gestion de grain de film MOD_G 203 utilise ses informations pour intervenir lors du prétraitement du contenu vidéo PRE_T 204 ainsi que pendant l'encodage du contenu vidéo prétraité effectué par l'encodeur ENCOD 205.

Le module de détection de grain de film MOD_DETECT_G 202 effectue pour chaque trame à encoder une mesure de l'intensité de grain de film $i$. La valeur de l'intensité de grain de film $i$ mesurée par le module de détection de grain de film MOD_DETECT_G 202 est ensuite transmise au module de gestion de grain de film MOD_G 203. Le module de gestion de grain de film MOD_G 203 reçoit également une information de débit d'encodage D_ENC 200. Le débit d'encodage D_ENC 200 peut être constant ou variable par trame. Le module de gestion de grain de film MOD_G 203 procède ensuite à une catégorisation du contenu vidéo IMG 201 en comparant l'intensité de grain de film $i$ à des valeurs seuils d'intensité de grain de film et en comparant également la valeur de débit d'encodage D_ENC 200 à des valeurs seuils de débit d'encodage. Un traitement du flux vidéo IN est ensuite appliqué à une étape TRAIT(IN) 304.

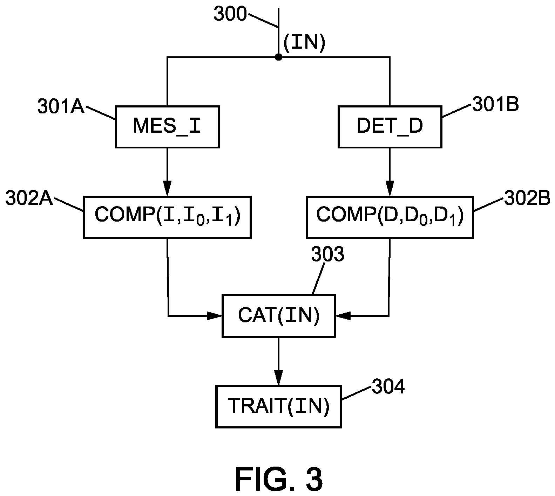

La figure 3 illustre les étapes du procédé de traitement d'un flux vidéo IN 300 selon un exemple de mode de réalisation de l'invention. À partir d'un flux vidéo IN 300 comprenant un grain de film, une intensité de grain de film $i$ est mesurée MES_i à l'étape 301A. Similairement, un débit d'encodage $d$ est déterminé à partir d'un flux vidéo IN 300. La valeur de l'intensité de grain de film $i$ mesurée est comparée à des valeurs seuils d'intensité de grain de film $I_0$ et $I_1$ lors d'une première étape de comparaison COMP $(i, I_0, I_1)$ 302A. De manière analogue, la valeur de débit d'encodage $d$ déterminée est comparée à des valeurs seuils de débit d'encodage $D_0$ et $D_1$ lors d'une deuxième étape de comparaison COMP $(d, D_0, D_1)$ 302B. Suite aux étapes 302A et 302B de comparaison respective de l'intensité de grain de film $i$ mesurée et de débit d'encodage $d$ déterminée à des valeurs seuils respectives, le flux vidéo IN 300 est catégorisé lors d'une étape de catégorisation CAT(IN) 303.

Dans l'exemple de mode de réalisation de l'invention représenté par la figure 3, la valeur de l'intensité de grain de film $i$ est comparée aux valeurs seuils d'intensité de grain de film $I_0$ et $I_1$. Un exemple de comparaison comme décrit à l'étape COMP $(i, I_0, I_1)$ 302A peut fournir le résultat suivant :

- Lorsque $i < I_0$, le contenu vidéo est considéré comme contenant peu de grain de film.
- Lorsque $I_0 \leq i < I_1$, le contenu vidéo est considéré comme contenant un grain de film moyen.
- Lorsque $i \geq I_1$, le contenu vidéo est considéré comme contenant un grain de film élevé.

D'une manière analogue, la valeur de débit d'encodage $d$ déterminée est comparée aux valeurs seuils de débit d'encodage $D_0$ et $D_1$. Un exemple de comparaison comme décrit à l'étape COMP ($d$, $D_0$, $D_1$) 302B peut fournir le résultat suivant :

- Lorsque $d < D_0$, le débit d'encodage est considéré comme faible.

- Lorsque $D_0 < d < D_1$, le débit d'encodage est considéré comme moyen

- Lorsque $d \geq D_1$, le débit d'encodage est considéré comme élevé.

Suite à ces deux étapes de comparaisons COMP ($i$, $I_0$, $I_1$) 302A et COMP ($d$, $D_0$, $D_1$) 302B, le contenu vidéo est ensuite catégorisé conformément à l'étape CAT(IN) 303. En fonction de la catégorisation du contenu vidéo un traitement différent est appliqué. Un traitement de conservation d'énergie ECO peut être appliqué pour les contenus vidéo contenant un grain de film moyen ou élevé à partir d'un débit d'encodage considéré comme moyen. Le traitement de conservation d'énergie ECO consiste en une ou plusieurs modifications intervenant au niveau du contrôle du débit d'encodage et de la décision afin d'améliorer la conservation du grain de film lors de l'encodage. Lorsque le contenu vidéo est considéré comme contenant un grain de film moyen et que le débit d'encodage est moyen, un filtre passe-bas est couplé avec le traitement de conservation d'énergie ECO. Ceci dans le but de supprimer les hautes fréquences du grain de film. En effet, le traitement de conservation d'énergie ECO n'est pas suffisant pour obtenir un rendu de contenu vidéo satisfaisant. Lorsque le débit d'encodage $d$ est faible, le grain de film est dans ce cas supprimé à l'aide d'un débruiteur qui peut avoir une force de débruitage proportionnelle à l'intensité de grain de film mesurée $i$.

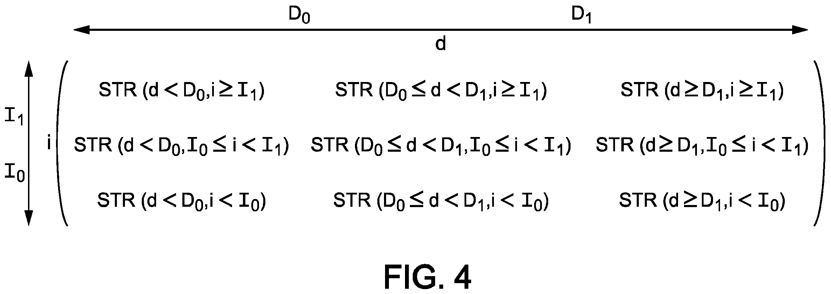

Dans l'exemple de réalisation de l'invention décrit précédemment, il est possible de représenter les différentes possibilités sous la forme d'une matrice 3x3 tel que représenté à la figure 4. Une stratégie de gestion de grain de film STR ($d$, $i$) peut être définie prenant ainsi en compte à la fois l'intensité de grain de film mesurée $i$ et le débit d'encodage déterminé $d$. Une stratégie de gestion de grain de film STR ($d$, $i$) peut par exemple correspondre à l'application d'un traitement ou/et l'application d'un filtre au contenu vidéo. Une stratégie de gestion de grain de film STR ($d$, $i$) peut également correspondre à ne pas effectuer d'action particulière. En reprenant l'exemple de réalisation de l'invention illustré à la figure 3 et décrit précédemment, il est possible d'obtenir les résultats suivant :

- STR ($d < D_0$, $i < I_0$) = application d'un débruiteur

- STR ($D_0 \leq d < D_1$, $i < I_0$) = aucune action appliquée

- STR ($d \geq D_1$, $i < I_0$) = aucune action appliquée

- STR ($d < D_0$, $I_0 \leq i < I_1$ = application d'un débruiteur

- STR ($D_0 \leq d < D_1$ $I_0 \leq i < I_1$) = traitement de conservation d'énergie ECO appliquée

- STR ($d \geq D_1$, $I_0 \leq i < I_1$) = traitement de conservation d'énergie ECO appliquée

- STR ($d < D_0$, $i \geq I_1$) = application d'un débruiteur

- STR ($D_0 \leq d < D_1$, $i \geq I_1$) = traitement de conservation d'énergie ECO appliquée couplé à un filtre passe-bas

- STR ($d \geq D_1$, $i \geq I_1$) = traitement de conservation d'énergie ECO appliquée

La stratégie STR ($d$, $i$) est appliquée au contenu vidéo comprenant un grain de film au niveau du prétraitement et de l'encodage.

Le module de gestion de grain de film, tel que celui par exemple décrit à la figure 2, MOD_G 203 utilise différentes méthodes pour mesurer l'intensité de grain de film. Un algorithme utilisant le calcul de différences temporelles peut par exemple être utilisé. Lors de l'utilisation d'un tel algorithme, une valeur numérique située entre 0 et 100 peut être déterminée représentant ainsi l'intensité du grain de film présent dans le contenu vidéo. Dans une telle méthode de calcul, plus le grain est intense, plus les différences temporelles sont importantes. Il existe d'autres méthodes pour déterminer l'intensité de grain de film présent dans un contenu vidéo telle que par exemple l'analyse spectrale d'un signal comprenant un grain de film. Dans le but d'obtenir ce signal, une soustraction entre le signal original et le même signal débruité peut par exemple être effectuée.

Dans la figure 3, plusieurs cas peuvent se présenter pour l'étape de détection de débit DET_D 301B :

- Le débit d'encodage peut être spécifié par l'utilisateur dans le cas d'un encodage CBR. Dans ce cas, le débit est le même pour toutes les trames.
- Le débit d'encodage moyen peut être spécifié par l'utilisateur dans le cas d'un encodage VBR. Dans ce cas également, le débit est le même pour toutes les trames.
- Le débit instantané peut être mesuré pour chaque trame après une première passe d'encodage dans le cas d'un encodage VBR. Dans ce cas, le débit varie par trame, il est plus élevé sur les scènes complexes et réciproquement.

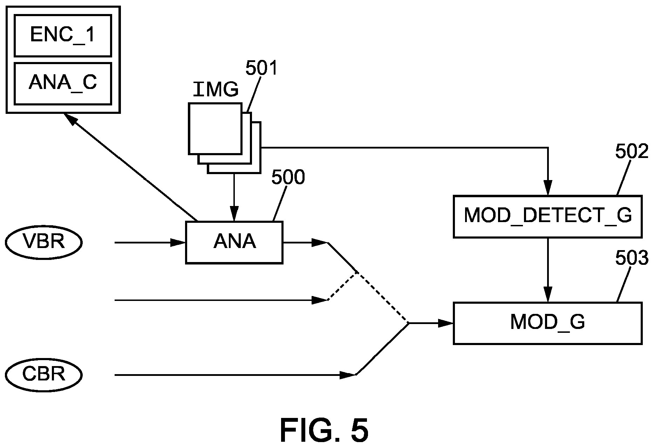

La figure 5 représente un exemple d'obtention du débit d'encodage pour une trame courante. VBR de d'anglais « *Variable Bit Rate* » désigne un débit d'encodage variable. CBR de l'anglais « *Constant Bit Rate* » désigne un débit d'encodage constant. Un débit moyen visé par l'utilisateur est indiqué par celui-ci pour un premier encodage ENC_1 et une analyse de contenu ANA_C au sein du module 500. Un débit est ainsi calculé pour la trame courante. Les images IMG 501 sont analysées par le module de détection de grain de film MOD_DETECT_G 502 qui transmet ensuite l'information au module de gestion de grain de film MOD_G 503. Le module de gestion de grain de film MOD_G 503 reçoit donc en entrée les informations de débit ainsi que l'information issu du module de détection de grain de film MOD_DETECT_G 502.

Dans l'exemple précédent, le débit d'encodage a été catégorisé dans trois catégories différentes :

- Lorsque $d < D_0$, le débit d'encodage est considéré comme faible.

- Lorsque $D_0 \leq d < D_1$, le débit d'encodage est considéré comme moyen

- Lorsque $d \geq D_1$, le débit d'encodage est considéré comme élevé.

La catégorisation du débit d'encodage en différentes catégories (trois catégories dans cet exemple) peut prendre en compte la résolution de l'image. La résolution de l'image peut se noter W x H provenant de l'anglais « *Width* X *Height* » désignant respectivement la largeur et la hauteur de l'image. La catégorisation du débit d'encodage peut également prendre en compte la fréquence d'image que l'on notera F ainsi que la norme de compression utilisée. Ainsi, le calcul de la valeur des seuils de débit d'encodage $D_0$ et $D_1$ de l'exemple précèdent peut se formuler de la manière suivante :

$$D_0 = \alpha * F \cdot W \cdot H \qquad\qquad D_1 = \beta * F \cdot W \cdot H$$

La valeur du seuil de débit d'encodage $D_1$ étant supérieure à la valeur du seuil de débit d'encodage $D_0$ on en déduit que $\beta > \alpha$. Les paramètres $\alpha$ et $\beta$ tenant compte de la norme de compression utilisée.

L'exemple de la figure 3 indiquait qu'un traitement de conservation d'énergie ECO peut être appliqué pour les contenus vidéo contenant un grain moyen ou élevé à partir d'un débit d'encodage considéré comme moyen. Dans le but d'améliorer la conservation du grain de film lors de l'encodage vidéo, plusieurs types de traitements de conservation d'énergie peuvent être utilisés. Ces traitements de conservations d'énergies peuvent être classés en deux. En effet, sur la figure 2 on distingue que le module de gestion de grain de film MOD_G 203 intervient lors de l'encodage ENCOD 205 à la fois au niveau du contrôle de débit CONT_D 205A ainsi qu'au niveau du processus de décision 205B DEC de l'encodeur ENCOD 205.

Lorsqu'un traitement de conservation d'énergie intervient au niveau du contrôle du débit de l'encodeur, l'allocation du débit entre les trames I, P et B peut être rendue plus équitable. I, P et B proviennent respectivement de l'anglais « *Intra Coded Pictures* », « *Predicted Pictures* » et « *Bi-directionally predicted pictures* ». Une telle allocation de débit permet d'éviter que l'utilisateur visionnant le contenu vidéo remarque une alternance entre un aspect grainé du contenu vidéo et un aspect lisse du contenu vidéo. En effet, une telle situation peut impacter négativement l'expérience de l'utilisateur vis-à-vis du visionnage du contenu vidéo.

Lors du processus de décision au niveau de l'encodeur, tel qu'illustré par DEC 205B à la figure 2, des coûts de débit-distorsion peuvent calculés. Ceci dans le but de déterminer le meilleur mode de codage à utiliser parmi les différents modes de codage proposés par la norme de compression vidéo.

Le calcul peut s'exprimer de la manière suivante :

$$J = D + \lambda R$$

Avec :

- J coût de débit distorsion

- R le débit associé à l'encodage du bloc courant

- $\lambda$ un facteur de poids

- D la distorsion mesurée

Le calcul de la distorsion peut par exemple s'effectué sous la forme du calcul d'une double somme sur $i$ et $j$, $i$ et $j$ représentant respectivement les indices de la première et de la deuxième sommes.

$$D = \sum_i \sum_j \left| x_{ij} - \hat{x}_{ij} \right|$$

Avec :

- $x_{ij}$ étant la valeur du pixel à la position ($i,j$) du bloc courant

- $\hat{x}_{ij}$ étant le pixel correspondant dans le bloc reconstruit

Dans le but d'assurer une meilleure conservation de l'énergie du grain de film, il est possible dans le calcul du coût de débit distorsion J de prendre en compte une différence d'énergie E. Le calcul du coût de débit distorsion J peut alors s'exprimer de la manière suivante :

$$J = D + \lambda R + \chi E$$

Avec :

- $\chi$ un facteur de poids
- E la différence d'énergie entre le bloc source et le bloc reconstruit

La différence d'énergie E peut être calculée sous la forme d'une différence de double somme da la manière suivante :

$$E = \sum_i \sum_j x_{ij}^2 - \sum_i \sum_j \hat{x}_{ij}^2$$

Prendre en compte la différe d'énergie E dans le calcul du coût de débit distorsion J permet d'éviter lors de l'encodage la production de blocs dit « aplatis » ne comprenant pas de grain de film. Ceci étant dû au fait que les prédictions aplaties, bien qu'elles réduisent la distorsion mathématique, éliminent le grain visuellement.

La prise en compte de la différence d'énergie E lors du processus de décision de l'encodeur peut être reproduite sans modifier le calcul du coût de débit distorsion J. La différence d'énergie peut réduire le choix du mode de codage Intra dans les trames P et B. En effet, les prédictions intra sont régulièrement aplaties. Une première solution par exemple peut donc être de ne pas autoriser à l'encodeur de tester l'intra dans les trames P et B. D'autres solutions peuvent comprendre : ne pas autoriser le test du mode Skip, désactiver le treillis, et interdire les bi-prédictions dans les trames B. Ces solutions peuvent être combinées entre elles. Le mode skip correspond à un mode de codage Inter, dans lequel aucun résiduel de bloc n'est transmis. Le résiduel de bloc correspond à une différence entre le bloc source et le bloc prédit. Au décodeur, le bloc reconstruit correspond donc exactement à la prédiction Inter.

Dans l'exemple mentionné à la figure 4, on constate que dans le cas d'un débit d'encodage $d$ considéré comme faible, indépendamment des valeurs d'intensité de grain de film, un débruiteur est utilisé. En effet, lorsque la valeur du débit d'encodage $d$ est inférieur à la valeur des seuils de débit d'encodage $D_0$, $d < D_0$ :

- STR ($d < D_0, i < I_0$) = application d'un débruiteur

- STR ($d < D_0, I_0 \leq i < I_1$ = application d'un débruiteur

- STR ($d < D_0, d < D_0, i \geq I_1$) = application d'un débruiteur

Par conséquent, la stratégie de gestion de grain de film STR $(d, i)$ prenant en compte à la fois l'intensité de grain de film mesurée $i$ et le débit d'encodage déterminé $d$ consiste à appliquer un débruiteur au contenu vidéo lorsque le débit d'encodage $d$ est considéré comme faible. En effet, lorsque le débit d'encodage est faible, l'utilisation d'un traitement de conservation d'énergie n'est pas suffisant afin d'assurer un résultat satisfaisant en terme de grain de film pour l'utilisateur visionnant le contenu vidéo. Par conséquent, l'utilisation d'un débruiteur supprimant totalement le grain de film du contenu vidéo permet d'éviter d'obtenir des artefacts d'encodage où le grain de film pourrait être partiellement réparti.

Il est proposé d'utiliser un débruiteur permettant le débruitage d'image avec une force de débruitage fonction de l'intensité de grain de film $i$ mesurée. Il est envisageable d'employer un débruiteur dont la force de débruitage est proportionnelle à l'intensité de grain de film détectée par le module de détection de grain de film MOD_DETECT_G 202 tel qu'illustré à la figure 2 par exemple. Le fait de réguler la force de débruitage en fonction de l'intensité de grain de film détectée se justifie par le fait que pour un contenu vidéo comprenant peu de grain de film, un débruiteur dont la force de débruitage est élevée peut impacter des détails importants au contenu vidéo. En effet, un débruiteur dont la force de débruitage serait trop importante par rapport au grain de film compris dans le contenu vidéo, pourrait malencontreusement lisser des contours ou textures du contenu vidéo. Cela aurait donc pour conséquence d'impacter négativement l'expérience de visionnage du contenu vidéo par l'utilisateur.

Lorsqu'un contenu vidéo est considéré comme contenant un grain de film élevé tel que mentionné avec l'exemple de la figure 3, c'est-à-dire lorsque $i \geq I_1$, la force de débruitage du débruiteur doit être suffisamment élevée pour supprimer le grain de film compris dans le contenu vidéo. Il est donc possible d'utiliser plusieurs types de débruiteurs tel que par exemple : FFT2D, MCTemporalDenoise, ou encore un filtre bilatéral ou anisotropique.

Lorsqu'un contenu vidéo est considéré comme contenant un grain de film élevé avec un débit d'encodage considéré comme moyen, tel que mentionné avec l'exemple de la figure 3, c'est-à-dire lorsque $D_0 \leq d < D_1$ et $i \geq I_1$, les traitements de conservation d'énergie ECO peuvent être insuffisants pour garantir la conservation du grain de film après encodage. Cela justifie que la stratégie de gestion de grain de film STR $(d, i)$ dans un tel cas consiste à appliquer un traitement de conservation ECO d'énergie couplé à un filtre passe bas. En effet, l'utilisation d'un filtre passe-bas permet d'éliminer certaines hautes fréquences du grain de film et ainsi faciliter l'encodage. La suppression de certaines hautes fréquences du grain de film peut fournir un aspect flouté au grain de film mais sera néanmoins plus appréciable pour l'utilisateur qu'un contenu vidéo entièrement lissé après débruitage. Il est évidemment possible d'utiliser plusieurs types de filtres passe bas, par exemple : filtre lanczos, filtre bilinéaire ou filtre bi-cubique.

Dans l'exemple décrit par la figure 4, différentes stratégies de gestion de grain de film STR $(d, i)$ ont été représentées sous une forme matricielle. Ces stratégies de gestion de grain de film STR $(d, i)$ ont été déterminées dans le cas où deux valeurs seuils de débit d'encodage $D_0$ et $D_1$ et deux valeurs seuils d'intensité de grain de film $I_0$ et $I_1$ ont été préalablement déterminées.

Dans un mode de réalisation de l'invention où le débit d'encodage est constant, CBR. Un module de détection de grain de film tel que le module MOD_DETECT_G 202 illustré à la figure 2 en tant qu'exemple, détecte à l'aide d'un algorithme de différences temporelles, l'intensité du grain de film compris dans le contenu vidéo. L'intensité de grain de film ainsi détectée est quantifiée par une valeur numérique compris entre 0 et 100.

Les deux valeurs seuils d'intensité de grain de film $I_0$ et $I_1$ considérés dans cet exemple sont $I_0 = 20$ et $I_1 = 80$. En reprenant les formules définit précédemment, le calcul de la valeur des seuils de débit d'encodage $D_0$ et $D_1$ fournit les formules suivantes :

$$D_0 = \frac{12 * F * W * H}{24 * 3840 * 2160} \qquad D_1 = \frac{30 * F * W * H}{24 * 3840 * 2160}$$

Le débruiteur utilisé dans cet exemple de mode de réalisation est le débruiteur FFT2D.

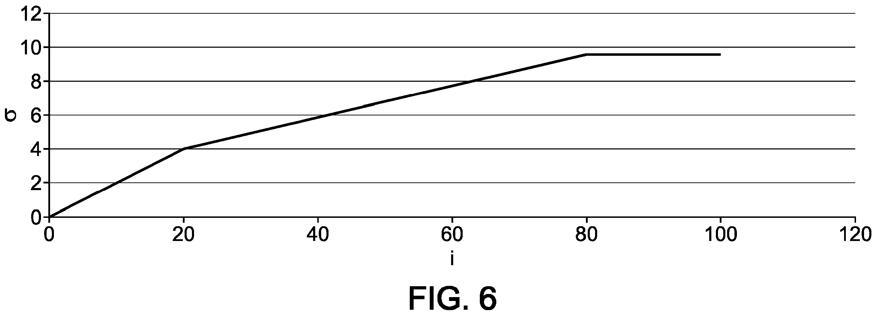

La figure 6 représente la force de débruitage $\sigma$ par rapport à l'intensité du grain de film. On remarque que la force de débruitage est une fonction linéaire par morceaux par rapport à l'intensité de grain de film. Il est donc possible de considérer que la force de débruitage $\sigma$ du débruiteur utilisé est proportionnelle par morceaux par rapport à l'intensité de grain de film.

Le filtre-passe bas ici utilisé est un filtre Lanczos dont la fréquence de coupure est de 0.5. Plusieurs traitements de conservations d'énergie sont appliqués. Ces traitements de conservations d'énergie peuvent inclurent la réduction des différences dans les pas de quantifications associés aux trames I, P et B. Cela permet une allocation de débit plus équitable. D'autres traitements de conservation d'énergie peuvent consister à interdire les choix du mode de codage Intra dans les trames P et B, du mode skip dans les trames P et B. Une alternative de traitement de conservation d'énergie peut être de désactiver le treillis.

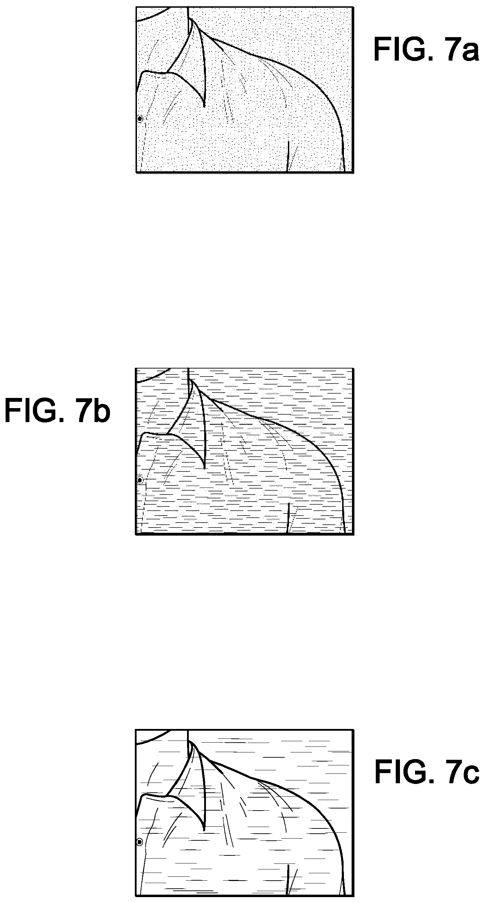

La figure 7a représente une image issue d'un contenu vidéo comprenant un grain de film élevé. L'encodage ici considéré est un encodage d'une séquence 1920x1080 comprenant un grain de film élevé en HEVC à 2.9 Mbps. HEVC est un acronyme désignant une norme de compression provenant de l'anglais « *High Efficiency Video Coding* ». Mbps est un autre acronyme désignant un débit d'encodage provenant de l'anglais « *Megabits per second* ». La figure 7b représente le résultat de référence obtenu tandis que la figure 7c représente le résultat obtenu avec l'invention. Il est ainsi possible de remarquer qu'un meilleur résultat est obtenu sur la figure 7c. Ceci permet donc d'améliorer grandement l'expérience de l'utilisateur visualisant le contenu vidéo en question. En effet un débit d'encodage de 2.9 Mbps est considéré comme faible, 2.9 Mbps < $D_0$ = 3 Mbps. Par conséquent, dans un encodage de référence sans application de stratégie de gestion de grain de film, le grain de film n'est pas conservé de manière satisfaisante ce qui se traduit par des aplats fréquents tel qu'il peut être observé sur la figure 7b. Etant donné que le contenu vidéo comprend un grain de film élevé et que le débit d'encodage est faible, la stratégie de gestion de grain de film STR *(d, i)* prenant en compte à la fois l'intensité de grain de film mesurée *i* et le débit d'encodage déterminé *d* va consister à appliquer un débruiteur pour ensuite encoder le contenu vidéo afin de fournir un résultat satisfaisant pour l'utilisateur. Cela correspond donc à la stratégie de gestion de grain STR ($d < D_0, i \geq I_1$).

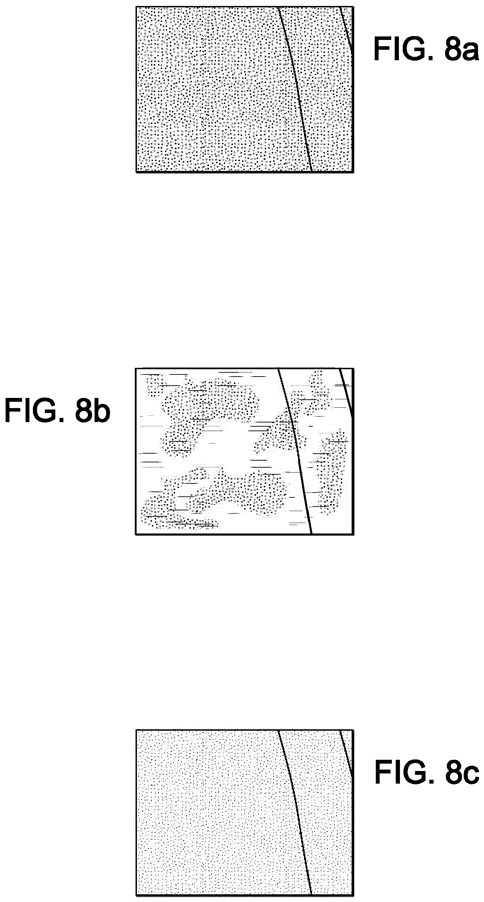

Les figures 8a, 8b et 8c illustrent la différence de résultat obtenu avec l'invention pour un contenu vidéo comprenant un grain de film élevé avec un débit d'encodage moyen. La figure 8a représente une image du contenu vidéo en question. La figure 8b représente le résultat de référence et la figure 8c le résultat de référence obtenu avec l'invention. Un débit d'encodage moyen se traduit par $D_0 \leq d < D_1$ et un contenu vidéo comprenant un grain de film élevé se traduit par $i \geq I_1$. En effet, $D_0$ = 0.6 Mbps < 1 Mbps < $D_1$ = 1.5 Mbps. Le contenu vidéo SD 576p24 est encodé en HEVC à 1 Mbps avec la présente invention. Par conséquent, la stratégie de gestion de grain de film STR *(d, i)* va consister à appliquer un traitement de conservation d'énergie couplé à un filtre passe-bas.

Ainsi, étant donné que le contenu vidéo comprend un grain de film très élevé, un encodage sans stratégie de gestion de grain de film peut fournir un résultat lisse, peu qualitatif et avec quelques traces de grain parsemées non uniformément répartis tel qu'il peut être observé sur la figure 8b. Ainsi, selon l'invention, une stratégie de gestion de grain de film STR ($D_0 \leq d < D_1, i \geq I_1$) est appliquée, consistant à premièrement filtrer les hautes fréquences de grain de film pour ensuite appliquer un traitement de conservation d'énergie afin de conserver le grain de film résiduel.

Dans un mode de réalisation de l'invention où le débit d'encodage est constant, CBR. Un module de détection de grain de film tel que le module MOD_DETECT_G 202 illustré à la figure 2 en tant qu'exemple, détecte à l'aide d'un algorithme de différences temporelles, l'intensité du grain de film compris dans le contenu vidéo. L'intensité de grain de film ainsi détectée est quantifiée par une valeur numérique compris entre 0 et 100.

En reprenant les formules définit précédemment, le calcul de la valeur des seuils de débit d'encodage $D_0$ et $D_1$ fournit les formules suivantes :

$$D_0 = \frac{12 * F * W * H}{24 * 3840 * 2160} \qquad D_1 = \frac{30 * F * W * H}{24 * 3840 * 2160}$$

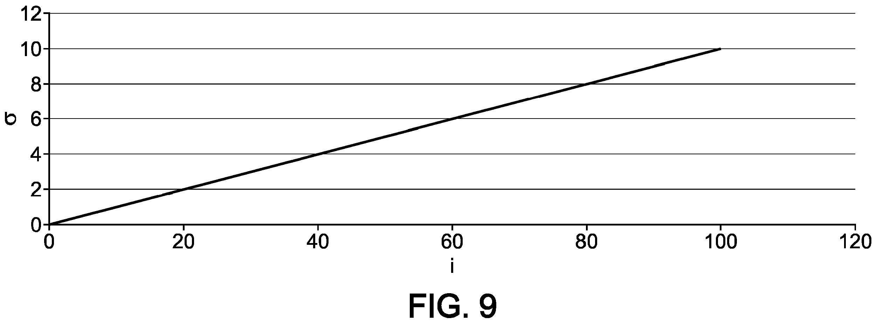

Le débruiteur utilisé dans cet exemple de mode de réalisation est un filtre gaussien avec un écart type $\sigma$ proportionnel à l'intensité du grain. La figure 9 représente l'écart type $\sigma$ en fonction de l'intensité de grain de film mesurée *i*. Il est aisément remarquable qu'il s'agit d'une fonction linéaire. Le filtre passe-bas utilisé est un filtre Lanczos avec une fréquence de coupure de 0.5. Un traitement de conservation d'énergie appliqué est la réduction des différences dans les pas de quantifications associés aux trames I, P et B, permettant ainsi une allocation de débit plus équitable. Un autre traitement de conservation d'énergie peut consister à prendre en compte la différence d'énergie dans le calcul des coûts débit distorsion au niveau de l'encodeur.

Dans ce mode de réalisation de l'invention, les seuils d'intensité de grains de film sont variables. Par conséquent, ces seuils d'intensité de grains de film peuvent différer pour chaque image du contenu vidéo. Le principe de ce mode de réalisation consiste à catégoriser une image N du contenu vidéo par rapport au couple de valeurs d'intensité de grain de film *i* et de débit d'encodage *d* de l'image précédente N-1. Lorsque l'intensité de grain de film *i* détectée par le module de détection de grain de film tel que le module MOD_DETECT_G 202 illustré à la figure 2 avoisine un des seuils d'intensité de grains de film, le seuil ainsi approché est augmenté ou réduit afin de biaiser l'image suivante N+1 dans la même catégorisation, c'est-à-dire de faire correspondre un couple de valeurs d'intensité de grain de film *i* et de débit d'encodage *d* équivalent. Ceci dans le but de garantir une certaine stabilité dans l'application des stratégies de gestion de grain de film STR (*d, i*).

Par conséquent, un changement dynamique des seuils d'intensité de grain de film $I_j$ ou j représente le seuil considéré est effectué. La méthode de changement dynamique des seuils suivante peut par exemple être utilisée :

◦ Pour la première image, indexée par 0, des seuils initiaux prédéterminés sont utilisés (par exemple, $I_0[0] = 20$ et $I_1[0] = 80$)

◦ Pour la deuxième image, indexée par 1 :

  ▪ Si l'intensité mesurée à la première image, i[0], est supérieure ou égale à $I_1[0]$ alors les seuils utilisés sont :

$$I_0[1] = I_0[0]$$

$$I_1[1] = I_1[0] - \max(0, 10 - 0.5 * (i[0] - I_1[0]))$$

  ▪ Si $I_0[0] <= i[0] < I_1[0]$ :

$$I_0[1] = I_0[0] - \max(0, 10 - 0.5 * (i[0] - I_0[0]))$$

$$I_1[1] = I_1[0] + \max(0, 10 - 0.5 * (I_1[0] - i[0]))$$

  ▪ Si $i[0] < I_0[0]$ :

$$I_0[1] = I_0[0] + \max(0, 10 - 0.5 * (I_0[0] - i[0]))$$

$$I_1[1] = I_0[1]$$

◦ ...

◦ Pour la (N+1)-ième image, indexée par N :

  ▪ Si $i[N-1] > I_1[N-1]$

$$I_0[N] = I_0[N-1]$$

$$I_1[N] = I_1[N-1] - \max(0, 10 - 0.5 * (i[N-1] - I_1[N-1]))$$

  ▪ Si $I_0[N-1] <= i[N-1] < I_1[N-1]$ :

$$I_0[N] = I_0[N-1] - \max(0, 10 - 0.5 * (i[N-1] - I_0[N-1]))$$

$$I_1[N] = I_1[N-1] + \max(0, 10 - 0.5 * (I_1[N-1] - i[N-1]))$$

  ▪ Si $i[N-1] < I_0[N-1]$ :

$$I_0[N] = I_0[N-1] + \max(0, 10 - 0.5 * (I_0[N-1] - i[N-1]))$$

•

$$I_1[N] = I_0[N-1]$$

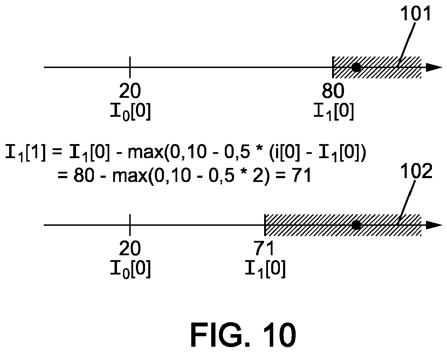

La figure 10 illustre l'exemple de méthode de changement dynamique des seuils d'intensité de grain de film décrit ci-dessus. La zone 1001 de la figure 10 indique que l'intensité de grain de film pour la première image indexé 0 est égale à 82, i[0]=82. Le seuil initial est de $I_0[0] = 80$ ce qui correspond sur l'échelle de valeur situé entre 0 et 100 à un contenu comprenant un grain de film élevé. Le calcul de $I_1[1]$ fournit la valeur de 71, cela procure ainsi une marge plus grande pour l'intensité i[1] favorisant ainsi la catégorisation en contenu comprenant un grain de film élevé comme indiqué par la zone 1002 de la figure 10.

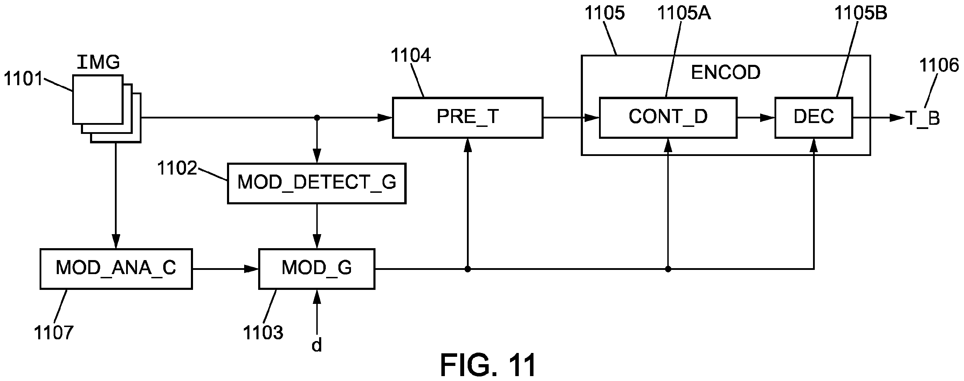

La présente invention peut également être appliquée dans le cas où les seuils de débit d'encodage sont variables. Dans une telle situation, les seuils de débit d'encodage dépendent de la complexité du contenu vidéo. Il est ainsi possible d'interposer un module d'analyse de contenu MOD_ANA_C 1107 afin de transmettre l'information au module de gestion de grain MOD_G 1103 tel qu'illustré sur la figure 11. Le module d'analyse de contenu MOD_ANA_C 1107 détermine une valeur C permettant de quantifier numériquement la complexité du contenu. Par exemple si le contenu vidéo contient des séquences de mouvements rapides ou des séquences comprenant des textures détaillées. Le module d'analyse de contenu MOD_ANA_C 1107 fournit ainsi cette information de complexité au module de gestion de grain MOD_G 1103. Par exemple, dans le cas d'un contenu vidéo représentant un évènement sportif, la complexité renvoyée par le module d'analyse de contenu MOD_ANA_C 1107 serait plus élevée que dans le cas d'une émission de journal télévisé. La complexité peut également varier au sein d'une même séquence, par exemple dans le cas d'une alternance entre scène de dialogue et scène d'action. La valeur C issue du module d'analyse de contenu MOD_ANA_C 1107 fournissant l'information de complexité peut être utilisée pour moduler les seuils de débits d'encodage. Par conséquent, il est possible d'insérer la valeur de la complexité C dans le calcul des seuils de débit d'encodage. En considérant qu'une telle valeur oscille entre 0 et 1, le calcul fournit alors les expressions suivantes :

$$D_0 = \frac{C * 12 * F * W * H}{24 * 3840 * 2160} \qquad D_1 = \frac{C * 30 * F * W * H}{24 * 3840 * 2160}$$

Par exemple, le module d'analyse de contenu MOD_ANA_C 1107 peut fournir une complexité C[i] pour chaque image « i ». Les seuils pour chaque image « i » peuvent donc s'exprimer par exemple de la manière suivante :

$$D_0[i] = \frac{C[i] * 12 * F * W * H}{24 * 3840 * 2160} \qquad D_1[i] = \frac{C[i] * 30 * F * W * H}{24 * 3840 * 2160}$$

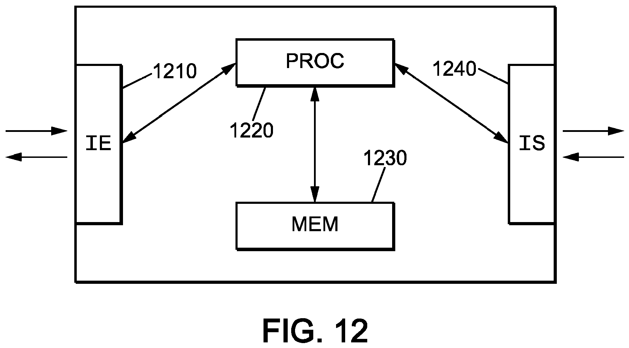

L'invention peut être mise en oeuvre par un dispositif informatique, tel qu'illustré à titre d'exemple sur la figure 12, lequel comporte un circuit de traitement incluant :

- une interface d'entrée 1210, pour recevoir les données d'image à traiter,

- un processeur 1220 coopérant avec une mémoire 1230, pour traiter les données d'image reçues, et

- une interface de sortie 1240 pour délivrer les données d'image traitées par la mise en oeuvre du procédé ci-avant.

La mémoire précitée 1230 peut stocker typiquement des codes d'instructions du programme informatique au sens de l'invention (dont un exemple d'ordinogramme est présenté sur la figure 3 commentée précédemment). Ces codes d'instructions peuvent être lus par le processeur 1220 pour exécuter le procédé selon l'invention. Le dispositif peut comporter en outre une mémoire de travail (distincte ou identique à la mémoire 1230) pour stocker des données temporaires.

L'invention ne se limite pas aux exemples de modes de réalisation décrits ci-avant, seulement à titre d'exemple, mais elle englobe toutes les variantes que pourra envisager l'homme de l'art dans le cadre des revendications ci-après. Par exemple, l'invention n'est pas limitée en termes de nombre de seuils d'intensité de grain de film ainsi qu'en nombre de seuils de débits d'encodage.

**Revendications**

1. Procédé, mis en oeuvre par des moyens informatiques, de traitement d'un flux vidéo, le flux vidéo étant susceptible de comporter un grain de film, le procédé comportant :

   - mesurer une intensité de grain de film dans le flux vidéo et obtenir au moins une information de débit d'encodage associé au flux vidéo pour déterminer un couple de valeurs respectives d'intensité de grain et de débit d'encodage ;
   - comparer des valeurs du couple avec des valeurs seuils respectives prédéterminées pour catégoriser le flux vidéo par rapport à des couples de valeurs prédéterminées d'intensité de grain et de débit ;
   - choisir une stratégie de gestion de grain de film parmi au moins quatre possibilités résultant de la catégorisation du flux vidéo ; et
   - encoder le flux vidéo en appliquant la stratégie choisie.

2. Procédé selon la revendication 1, dans lequel, si le débit est inférieur à un premier débit seuil ($D_0$), on applique un débruitage d'image avec une force de débruitage qui est fonction de l'intensité de grain mesurée.

3. Procédé selon l'une des revendications précédentes, dans lequel, si le débit est supérieur à un premier débit seuil ($D_0$) et si l'intensité de grain mesurée est inférieure à un premier seuil d'intensité ($I_0$), on n'applique aucun traitement de gestion de grain de film au flux vidéo.

4. Procédé selon l'une des revendications précédentes, dans lequel, si le débit est supérieur à un premier débit seuil ($D_0$) et si l'intensité de grain mesurée est supérieure à un premier seuil ($I_0$), on applique un traitement de conservation d'énergie au flux vidéo, dans lequel le traitement de conservation d'énergie comprend l'un au moins parmi :

   - une allocation plus équitable du débit d'encodage associé au flux vidéo correspondant à une réduction des différences des pas de quantification associés aux trames I, P et B du flux vidéo,
   - une prise en compte d'une différence d'énergie entre un bloc source et un bloc reconstruit dans les calculs de coûts débit-distorsion,
   - une interdiction de choix du mode de codage Intra pour l'encodage de trames P et B du flux vidéo,
   - une interdiction de choix du mode Skip,
   - une désactivation de treillis de quantification, et
   - une interdiction des bi-prédictions dans les trames B du flux vidéo.

5. Procédé selon la revendication 4, dans lequel :

   - si le débit est en outre inférieur à un deuxième débit seuil ($D_1$), lequel deuxième débit seuil ($D_1$) est supérieur au premier débit seuil ($D_0$), et
   - si l'intensité de grain mesurée est supérieure à un deuxième seuil d'intensité ($I_1$), supérieur au premier seuil d'intensité ($I_0$), on applique, outre le traitement de conservation d'énergie au flux vidéo, un filtre passe-bas pour atténuer les hautes fréquences de grain.

6. Procédé selon l'une des revendications précédentes, comprenant en outre :

   - transmettre le flux vidéo, le flux vidéo transmis étant dépourvu de message de type SEI relatif à la présence de grain de film.

7. Programme informatique comportant des instructions qui, lorsque le programme est exécuté par un processeur, conduisent celui-ci à mettre en oeuvre le procédé selon l'une des revendications précédentes.

8. Dispositif de traitement d'un flux vidéo avant encodage, le flux vidéo étant susceptible de comporter un grain de film, le dispositif comprenant :

   - un processeur configuré pour effectuer les opérations suivantes :
   - mesurer une intensité de grain de film dans le flux vidéo et
   obtenir au moins une information de débit d'encodage associé au flux vidéo pour déterminer un couple de valeurs respectives d'intensité de grain et de débit d'encodage ;
   - comparer des valeurs du couple avec des valeurs seuils respectives prédéterminées pour catégoriser le flux vidéo par rapport à des couples de valeurs prédéterminées d'intensité de grain et de débit ; et
- choisir une stratégie de gestion de grain de film parmi au moins quatre possibilités résultant de la catégorisation du flux vidéo,
- encoder le flux vidéo en appliquant la stratégie choisie.

9. Dispositif selon la revendication 8, dans lequel, si le débit est inférieur à un premier débit seuil ($D_0$), on applique un débruitage d'image avec une force de débruitage qui est fonction de l'intensité de grain mesurée.

10. Dispositif selon l'une quelconque des revendications 8 et 9, dans lequel, si le débit est supérieur à un premier débit seuil ($D_0$) et si l'intensité de grain mesurée est inférieure à un premier seuil d'intensité ($I_0$), on n'applique aucun traitement de gestion de grain de film au flux vidéo.

11. Dispositif selon l'une quelconque des revendications 8 à 10, dans lequel, si le débit est supérieur à un premier débit seuil ($D_0$) et si l'intensité de grain mesurée est supérieure à un premier seuil ($I_0$), on applique un traitement de conservation d'énergie au flux vidéo, dans lequel le traitement de conservation d'énergie comprend l'un au moins parmi :

- une allocation plus équitable du débit d'encodage associé au flux vidéo correspondant à une réduction des différences des pas de quantification associés aux trames I, P et B du flux vidéo,
- une prise en compte d'une différence d'énergie entre un bloc source et un bloc reconstruit dans les calculs de coûts débit-distorsion,
- une interdiction de choix du mode de codage Intra pour l'encodage de trames P et B du flux vidéo,
- une interdiction de choix du mode Skip,
- une désactivation de treillis de quantification, et
- une interdiction des bi-prédictions dans les trames B du flux vidéo.

12. Dispositif selon la revendication 11, dans lequel :

- si le débit est en outre inférieur à un deuxième débit seuil ($D_1$), lequel deuxième débit seuil ($D_1$) est supérieur au premier débit seuil ($D_0$), et
- si l'intensité de grain mesurée est supérieure à un deuxième seuil d'intensité ($I_1$), supérieur au premier seuil d'intensité ($I_0$), on applique, outre le traitement de conservation d'énergie au flux vidéo, un filtre passe-bas pour atténuer les hautes fréquences de grain.

13. Dispositif selon l'une quelconque des revendications 8 à 12, dans lequel le processeur est en outre configuré pour effectuer les opérations suivantes :

- transmettre le flux vidéo, le flux vidéo transmis étant dépourvu de message de type SEI relatif à la présence de grain de film.

**Patentansprüche**

1. Verfahren, das von Informatikmitteln umgesetzt wird, zur Verarbeitung eines Videostroms, wobei der Videostrom ein Filmkorn beinhalten kann, wobei das Verfahren beinhaltet:

- Messen einer Filmkornstärke in dem Videostrom, und Erhalten mindestens einer Information über eine Codierrate, die dem Videostrom zugeordnet ist, um ein jeweiliges Wertepaar für die Kornstärke und die Codierrate zu bestimmen;
- Vergleichen der Werte des Paares mit jeweiligen vorbestimmten Schwellenwerten zum Einordnen des Videostroms nach Kategorien in Bezug auf Paare vorbestimmter Werte für die Kornstärke und die Rate;
- Auswählen einer Verwaltungsstrategie eines Filmkorns aus mindestens vier Möglichkeiten, die sich aus dem Einordnen des Videostroms nach Kategorien ergeben; und
- Codieren des Videostroms durch Anwenden der ausgewählten Strategie.

2. Verfahren nach Anspruch 1, wobei, wenn die Rate geringer als eine erste Schwellenrate ($D_0$) ist, eine Bildrausch-unterdrückung mit einer Rauschunterdrückungskraft angewandt wird, die von der gemessenen Kornstärke abhängig ist.

**3.** Verfahren nach einem der vorstehenden Ansprüche, wobei, wenn die Rate höher als eine erste Schwellenrate ($D_0$) ist, und wenn die gemessene Kornstärke geringer als eine erste Stärkeschwelle ($I_0$) ist, keine Verarbeitung zur Verwaltung eines Filmkorns auf den Videostrom angewandt wird.

**4.** Verfahren nach einem der vorstehenden Ansprüche, wobei, wenn die Rate höher als eine erste Schwellenrate ($D_0$) ist, und wenn die gemessene Kornstärke höher als eine erste Schwelle ($I_0$) ist, eine Verarbeitung zur Energieeinsparung auf den Videostrom angewandt wird, wobei die Verarbeitung zur Energieeinsparung mindestens eines aus Folgendem umfasst:

- eine angemessenere Zuweisung der Codierrate, die dem Videostrom zugeordnet ist, entsprechend einer Verringerung der Differenzen der Quantisierungsschritte die den Frames I, P und B des Videostroms zugeordnet sind,
- eine Berücksichtigung einer Energiedifferenz zwischen einem Quellblock und einem Block, der in den Rate-Verzerrung-Aufwandsberechnungen rekonstruiert wird,
- ein Verbot der Auswahl des Intra-Codiermodus zum Codieren der Frames P und B des Videostroms,
- ein Verbot der Auswahl des Skip-Modus,
- eine Deaktivierung von Quantisierungsgittern, und
- ein Verbot der Doppelvorhersagen in den Frames B des Videostroms.

**5.** Verfahren nach Anspruch 4, wobei:

- wenn die Rate weiter geringer als eine zweite Schwellenrate ($D_1$) ist, wobei die zweite Schwellenrate ($D_1$) größer als die erste Schwellenrate ($D_0$) ist, und
- wenn die gemessene Kornstärke höher als eine zweite Stärkeschwelle ($I_1$), höher als die erste Stärkeschwelle ($I_0$) ist, neben der Verarbeitung zur Energieeinsparung auf den Videostrom ein Tiefpassfilter angewandt wird, um die hohen Kornfrequenzen abzuschwächen.

**6.** Verfahren nach einem der vorstehenden Ansprüche, weiter umfassend:

- Übertragen des Videostroms, wobei der übertragene Videostrom mit keiner Nachricht des Typs SEI in Bezug auf das Vorhandensein eines Filmkorns versehen ist.

**7.** Informatikprogramm, das Anweisungen beinhaltet, die, wenn das Programm von einem Prozessor ausgeführt wird, diesen dazu veranlassen, das Verfahren nach einem der vorstehenden Ansprüche umzusetzen.

**8.** Vorrichtung zur Verarbeitung eines Videostroms, wobei der Videostrom ein Filmkorn beinhalten kann, wobei die Vorrichtung beinhaltet:

- einen Prozessor, der konfiguriert ist, um die folgenden Operationen durchzuführen:
- Messen einer Filmkornstärke in dem Videostrom, und Erhalten mindestens einer Information über eine Codierrate, die dem Videostrom zugeordnet ist, um ein jeweiliges Wertepaar für die Kornstärke und die Codierrate zu bestimmen;
- Vergleichen der Werte des Paares mit jeweiligen vorbestimmten Schwellenwerten zum Einordnen des Videostroms nach Kategorien in Bezug auf Paare vorbestimmter Werte für die Kornstärke und die Rate;
- Auswählen einer Verwaltungsstrategie eines Filmkorns aus mindestens vier Möglichkeiten, die sich aus dem Einordnen des Videostroms nach Kategorien ergeben,
- Codieren des Videostroms durch Anwenden der ausgewählten Strategie.

**9.** Vorrichtung nach Anspruch 8, wobei, wenn die Rate geringer als eine erste Schwellenrate ($D_0$) ist, eine Bildrauschunterdrückung mit einer Rauschunterdrückungskraft angewandt wird, die von der gemessenen Kornstärke abhängig ist.

**10.** Vorrichtung nach einem der Ansprüche 8 und 9, wobei, wenn die Rate höher als eine erste Schwellenrate ($D_0$) ist, und wenn die gemessene Kornstärke geringer als eine erste Stärkeschwelle ($I_0$) ist, keine Verarbeitung zur Verwaltung eines Filmkorns auf den Videostrom angewandt wird

**11.** Vorrichtung nach einem der Ansprüche 8 bis 10, wobei, wenn die Rate höher als eine erste Schwellenrate ($D_0$) ist, und wenn die gemessene Kornstärke höher als eine erste Schwelle ($I_0$) ist, eine Verarbeitung zur Energieeinsparung auf den Videostrom angewandt wird, wobei die Verarbeitung zur Energieeinsparung mindestens eines aus Folgendem umfasst:

- eine angemessenere Zuweisung der Codierrate, die dem Videostrom zugeordnet ist, entsprechend einer Verringerung der Differenzen der Quantisierungsschritte die den Frames I, P und B des Videostroms zugeordnet sind,
- eine Berücksichtigung einer Energiedifferenz zwischen einem Quellblock und einem Block, der in den Rate-Verzerrung-Aufwandsberechnungen rekonstruiert wird,
- ein Verbot der Auswahl des Intra-Codiermodus zum Codieren der Frames P und B des Videostroms,
- ein Verbot der Auswahl des Skip-Modus,
- eine Deaktivierung von Quantisierungsgittern, und
- ein Verbot der Doppelvorhersagen in den Frames B des Videostroms.

12. Vorrichtung nach Anspruch 11, wobei:

- wenn die Rate weiter geringer als eine zweite Schwellenrate ($D_1$) ist, wobei die zweite Schwellenrate ($D_1$) größer als die erste Schwellenrate ($D_0$) ist, und
- wenn die gemessene Kornstärke höher als eine zweite Stärkeschwelle ($I_1$), höher als die erste Stärkeschwelle ($I_0$) ist, neben der Verarbeitung zur Energieeinsparung auf den Videostrom ein Tiefpassfilter angewandt wird, um die hohen Kornfrequenzen abzuschwächen

13. Vorrichtung nach einem der Ansprüche 8 bis 12, wobei der Prozessor weiter konfiguriert ist, um die folgenden Operationen durchzuführen:

- Übertragen des Videostroms, wobei der übertragene Videostrom mit keiner Nachricht des Typs SEI in Bezug auf das Vorhandensein eines Filmkorns versehen ist.

## Claims

1. Method, implemented by computer means, for processing a video stream, the video stream being capable of comprising film grain, the method comprising:

- measuring a film grain intensity in the video stream and obtaining at least one encoding bitrate information item associated with the video stream, in order to determine a pair of respective values for the grain intensity and encoding bitrate;
- comparing the values of said pair with predetermined respective threshold values in order to categorize the video stream with respect to predetermined pairs of values for the grain intensity and bitrate;
- choosing a film grain management strategy among at least four possibilities resulting from the categorization of the video stream; and
- encoding the video stream using the chosen film grain management strategy.

2. Method according to claim 1, wherein, if the bitrate is less than a first bitrate threshold ($D_0$), image denoising is applied with a denoising strength that is a function of the measured grain intensity.

3. Method according to one of the preceding claims, wherein, if the bitrate is greater than a first bitrate threshold ($D_0$) and if the measured grain intensity is less than a first intensity threshold ($I_0$), no film grain management processing is applied to the video stream.

4. Method according to one of the preceding claims, wherein, if the bitrate is greater than a first bitrate threshold ($D_0$) and if the measured grain intensity is greater than a first threshold ($I_0$), energy conservation processing is applied to the video stream, in which the energy conservation processing comprises at least one of:

- a more equitable allocation of the encoding bitrate associated with the video stream corresponding to a reduction in the differences in the quantization steps associated with the I, P and B frames of the video stream,
- taking into account an energy difference between a source block and a reconstructed block in the rate-distortion cost calculations,
- prohibiting a choice of Intra coding mode for encoding of P and B frames of the video stream,

- prohibiting a choice of Skip mode,
- disabling quantification trellis, and
- prohibiting bi-directional predictions in B frames of the video stream.

5. Method according to claim 4, wherein:

- if the bitrate is also less than a second bitrate threshold ($D_1$), said second bitrate threshold ($D_1$) being greater than the first bitrate threshold ($D_0$), and
- if the measured grain intensity is greater than a second intensity threshold ($I_1$) which is greater than the first intensity threshold ($I_0$),

a low-pass filter is applied to the image in addition to the energy conservation processing applied to the video stream, in order to attenuate the grain high frequencies.

6. Method according to one of the preceding claims, wherein the method further comprises:

- transmitting the video stream, said video stream being without SEI type of message relating to the presence of film grain.

7. Computer program comprising instructions which, when the program is executed by a processor, lead it to implement the method according to any one of the preceding claims.

8. Device for processing a video stream prior to encoding, the video stream being capable of containing film grain, the device comprising:

- a processor configured to carry out the following operations:
- measuring a film grain intensity in the video stream and obtaining at least one encoding bitrate information item associated with the video stream, in order to determine a pair of respective values for the grain intensity and encoding bitrate;
- comparing the values of said pair with predetermined respective threshold values in order to categorize the video stream with respect to predetermined pairs of values for the grain intensity and bitrate; and
- choosing a film grain management strategy among at least four possibilities resulting from the categorization of the video stream;
- encoding the video stream using the chosen film grain management strategy.

9. Device according to claim 8, wherein, if the bitrate is less than a first bitrate threshold ($D_0$), image denoising is applied with a denoising strength that is a function of the measured grain intensity.

10. Device according to any one of the preceding claims 8 and 9, wherein, if the bitrate is greater than a first bitrate threshold ($D_0$) and if the measured grain intensity is less than a first intensity threshold ($I_0$), no film grain management processing is applied to the video stream.

11. Device according to any one of the preceding claims 8-10, wherein, if the bitrate is greater than a first bitrate threshold ($D_0$) and if the measured grain intensity is greater than a first threshold ($I_0$), energy conservation processing is applied to the video stream, in which the energy conservation processing comprises at least one of:

- a more equitable allocation of the encoding bitrate associated with the video stream corresponding to a reduction in the differences in the quantization steps associated with the I, P and B frames of the video stream,
- taking into account an energy difference between a source block and a reconstructed block in the rate-distortion cost calculations,
- prohibiting a choice of Intra coding mode for encoding of P and B frames of the video stream,
- prohibiting a choice of Skip mode,
- disabling quantification trellis, and
- prohibiting bi-directional predictions in B frames of the video stream.

12. Device according to claim 11, wherein:

- if the bitrate is also less than a second bitrate threshold ($D_1$), said second bitrate threshold ($D_1$) being greater

than the first bitrate threshold ($D_0$), and
- if the measured grain intensity is greater than a second intensity threshold ($I_1$) which is greater than the first intensity threshold ($I_0$),

a low-pass filter is applied to the image in addition to the energy conservation processing applied to the video stream, in order to attenuate the grain high frequencies.

13. Device according to any one of the preceding claims 8-12, wherein the processor is further configured for:

- transmitting the video stream, said video stream being without SEI type of message relating to the presence of film grain.

FIG. 1

FIG. 2

300 —

(IN)

301A — MES_I        DET_D — 301B

302A — COMP(I,$I_0$,$I_1$)        COMP(D,$D_0$,$D_1$) — 302B

303

CAT(IN)

TRAIT(IN) — 304

# FIG. 3

$$D_0 \qquad\qquad D_1$$

$$d$$

$$I_1$$
$$I_0$$

$$i\begin{pmatrix} STR\,(d < D_0, i \geq I_1) & STR\,(D_0 \leq d < D_1, i \geq I_1) & STR\,(d \geq D_1, i \geq I_1) \\ STR\,(d < D_0, I_0 \leq i < I_1) & STR\,(D_0 \leq d < D_1, I_0 \leq i < I_1) & STR\,(d \geq D_1, I_0 \leq i < I_1) \\ STR\,(d < D_0, i < I_0) & STR\,(D_0 \leq d < D_1, i < I_0) & STR\,(d \geq D_1, i < I_0) \end{pmatrix}$$

## FIG. 4

FIG. 5

EP 3 490 255 B1

FIG. 6

FIG. 7a

FIG. 7b

FIG. 7c

FIG. 8a

FIG. 8b

FIG. 8c

FIG. 9

101

20
$I_0[0]$

80
$I_1[0]$

$I_1[1] = I_1[0] - \max(0, 10 - 0,5 * (i[0] - I_1[0])$
$= 80 - \max(0, 10 - 0,5 * 2) = 71$

102

20
$I_0[0]$

71
$I_1[0]$

# FIG. 10

FIG. 11

FIG. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20160198165 A

- US 2007014484 A1